Europäisches Patentamt

European Patent Office

Office européen des brevets

(19)

(11) Numéro de publication : **0 520 868 A1**

# (12) DEMANDE DE BREVET EUROPEEN

(21) Numéro de dépôt : **92401725.4**

(22) Date de dépôt : **19.06.92**

(51) Int. Cl.⁵ : **G05B 9/03**

(30) Priorité : **25.06.91 FR 9107789**

(43) Date de publication de la demande :
**30.12.92 Bulletin 92/53**

(84) Etats contractants désignés :
**AT BE CH DE ES FR GB IT LI LU NL SE**

(71) Demandeur : **Société Anonyme dite: CEGELEC
13, rue Antonin Raynaud
F-92309 Levallois-Perret (FR)**

(72) Inventeur : **Desvaux, Jean-Pierre
61, quai de la Baronnie
F-94480 Ablon-Sur-Seine (FR)**

(74) Mandataire : **Schaub, Bernard et al
c/o SOSPI 14-16 rue de la Baume
F-75008 Paris (FR)**

(54) **Dispositif limiteur de perturbation, de type redondant, pour équipement de régulation.**

㊼ Dispositif limiteur de perturbation pour équipement de régulation d'un actionneur d'une commande de processus où l'actionneur est piloté à partir d'une unité génératrice de consigne (1), au travers d'une pluralité de modules régulateurs (3A, 3B, ..., 3N), reliés en sortie en un même point (UP) de manière que la commande de pilotage fournie à l'actionneur en ce point corresponde à la valeur moyenne des tensions individuellement fournies.

Le dispositif est constitué par un voteur composé de modules (4A, 4B,..., 4N) qui s'insèrent chacun entre la sortie de l'un des modules régulateurs et une résistance individuelle correspondante (Ra, Rb ,..., RN), liée au point commun (UP). Chaque module de voteur comporte un adaptateur d'impédance (7A) relié en entrée à un module régulateur et en sortie à la résistance individuelle correspondante, cette sortie étant aussi reliée par une résistance (9A), d'une part à l'entrée de l'adaptateur par l'intermédiaire d'un écrêteur(8A), d'autre part à un point (UR) commun à tous les adaptateurs du voteur.

FIG.1

EP 0 520 868 A1

L'invention concerne un dispositif limiteur de perturbation, de type redondant, pour équipement de régulation.

Il est bien connu dans le domaine de la régulation d'utiliser plusieurs voies redondantes pour assurer la commande d'un processus, par exemple la commande régulée d'une turbine à vapeur, à partir d'une consigne par l'intermédiaire d'un dispositif composé de modules régulateurs identiques disposés en parallèle.

La commande de pilotage du processus qui est obtenue correspond classiquement à une valeur moyenne obtenue à partir des valeurs régulées simultanément fournies par les modules régulateurs, qui sont par exemple du type proportionnel et intégral.

Dans une forme classique de réalisation en technique analogique, la commande de pilotage est une valeur moyenne de tension obtenue à partir des tensions respectivement fournies par chacun des modules régulateurs, les sorties de tension de ces derniers étant reliées, à cet effet, en un point commun, via une résistance de même valeur pour chacune.

En cas de défaillance affectant l'une des voies, la tension fournie par le module contenu dans cette voie est le plus généralement soit nulle, soit maximale, ce qui se traduit par l'obtention d'une variation inacceptable de la valeur de pilotage, cette variation étant par exemple susceptible d'atteindre 33% dans le cas d'un dispositif à trois voies.

Pour remédier à cet inconvénient, la présente invention propose donc un dispositif limiteur de perturbation, de type redondant, pour équipement de régulation d'un actionneur d'une chaîne de commande de processus où ledit actionneur est piloté à partir d'une unité génératrice de consigne et au travers d'une pluralité de modules régulateurs, préférablement du type proportionnel et intégral, fournissant chacun une commande de pilotage sous forme de tension et étant reliés à l'actionneur par l'intermédiaire d'un point commun, via une résistance individuelle, de même valeur pour chacun, de manière que la commande de pilotage fournie à l'actionneur soit la valeur moyenne des tensions individuellement fournies par ces modules régulateurs, en fonction de la consigne qui leur est appliquée et d'une mesure traduisant l'effet produit par l'actionneur sur le processus.

Selon une caractéristique de l'invention, le dispositif limiteur de perturbation est constitué par un voteur composé de modules qui s'insèrent chacun entre la sortie de l'un des modules régulateurs et la résistance individuelle correspondante liée au point commun au travers duquel l'actionneur est piloté, chaque module de voteur comportant un adaptateur d'impédance relié par une entrée haute impédance à la sortie d'un module régulateur et par une sortie à la résistance individuelle correspondante, cette sortie d'adaptateur étant relié par une résistance, dite d'aval, d'une part en boucle à l'entrée de cet adaptateur par l'intermédiaire d'un écrêteur, d'autre part à un point commun à tous les adaptateurs du voteur.

L'invention, ses caractéristiques et ses avantages sont précisés dans la description qui suit, en liaison avec les figures répertoriées ci-dessous.

La figure 1 présente un schéma de principe d'une chaîne de commande de processus dont l'équipement de régulation comporte un dispositif limiteur de perturbation selon l'invention.

La figure 2 présente un forme de réalisation d'un adaptateur d'impédance pour dispositif limiteur selon l'invention.

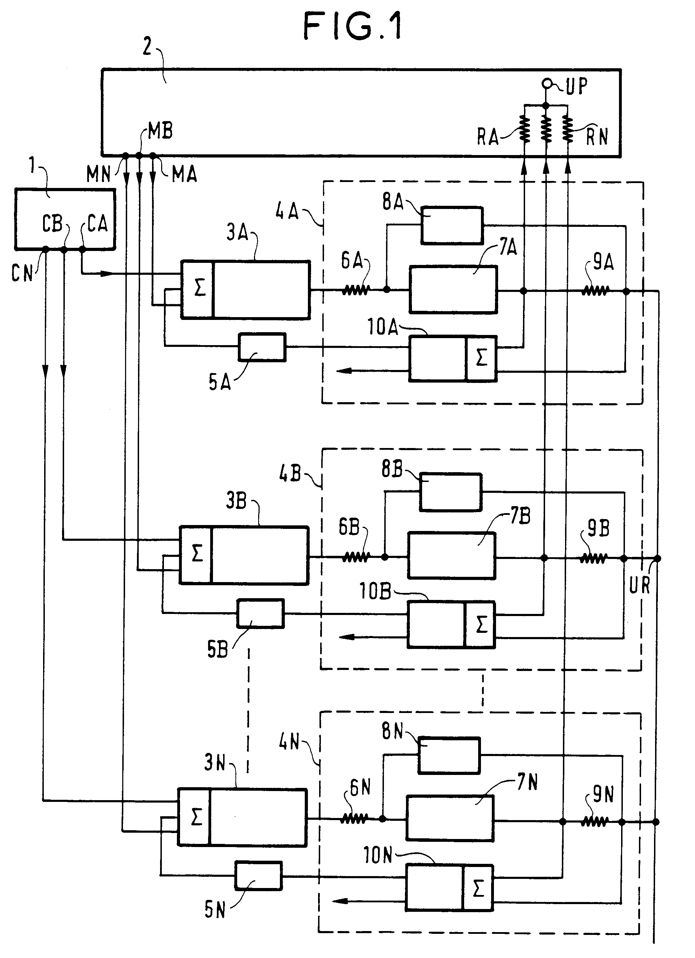

La chaîne de commande de processus schématisée en figure 1 est par exemple prévue pour une turbine à vapeur, elle comporte notamment une unité 1 apte à fournir une consigne, telle qu'une consigne de vitesse destinée à être exploitée pour commander un actionneur de pilotage du processus, tel qu'un positionneur de vanne d'admission de vapeur dans l'exemple proposé. Cet actionneur non représenté est un des éléments de l'ensemble 2 que constitue la turbine et son environnement de commande et de surveillance.

L'actionneur de pilotage évoqué ci-dessus reçoit un signal de commande électrique élaboré par l'équipement de régulation qui comporte "n" voies identiques parallèles, le nombre "n" étant choisi au moins égal à trois.

Chaque voie comporte un module régulateur, référencé 3A, 3B, ..., 3N, auquel est associé un module de voteur, référencé 4A, 4B,..., 4N, seules trois voies étant envisagées et présentées ici.

Comme indiqué plus haut, la commande électrique fournie à l'actionneur de pilotage correspond à la valeur moyenne des signaux fournis par les "n" voies, celle-ci est classiquement obtenue en un point, ici référencé UP, qui est commun à "n" résistances, référencées RA à RN, respectivement placées chacune en sortie d'une voie différente.

De manière classique, l'ensemble 2 fournit en retour au moins une valeur, obtenue par mesure, à chacun des modules régulateurs, cette mesure traduisant l'effet produit par l'actionneur de pilotage au niveau du processus, c'est-à-dire sur la turbine dans l'exemple d'application choisi.

Ces mesures sont ici supposées fournies sous forme de tension par des sorties de l'ensemble 2 référencées MA, MB,. .. MN.

Chaque module régulateur 3A, 3B,..., 3N est relié par une première entrée à une sortie correspondante CA, CB,..., CN de l'unité 1 pour en recevoir une consigne et par une seconde entrée à une sortie MA, MB,..., MN de l'ensemble 2 pour en recevoir une mesure.

Les tensions correspondant à cette consigne et à cette mesure sont traitées, dans le module régulateur qui les reçoit, pour produire l'une des "n" tensions de commande à partir desquelles la valeur de pilotage fournie à l'actionneur de même nom est obtenue.

La tension de commande individuellement produite par un module régulateur 3A, 3B, ..., 3N d'une voie est appliquée à l'entrée du module de voteur 4A, 4B,..., 4N qui le suit dans cette voie et qui est apte à lui fournir une indication limitée de correction appliquée, via un correcteur de décalage 5A, 5B,..., 5N, au niveau d'une troisième entrée.

Les "n" modules de voteur qui constitue le dispositif de limitation de perturbation selon l'invention sont associés de manière à limiter la variation de la valeur de pilotage en cas de défaillance par un écrêtage de chacune des "n" sorties sur la valeur moyenne de ces "n" sorties.

Le dispositif de limitation est donc constitué par un voteur à "n" modules.

Chaque module de voteur comporte essentiellement une résistance d'entrée 6A, 6B, ..., 6N, de grande valeur, par exemple de 200 K.Ohm, un adaptateur d'impédance 7A, 7B,..., 7N, relié à la sortie d'un module régulateur par l'une des résistances d'entrée, un écrêteur 8A, 8B, ..., 8N connecté entre la sortie et l'entrée de l'adaptateur d'impédance du module de voteur qui le comporte et une faible résistance d'aval 9A, 9B, ..., 9N, par exemple de l'ordre de 300 Ohm, reliée en sortie d'adaptateur d'impédance, en amont du point où se connecte l'écrêteur du module.

Les "n" adaptateurs d'impédance sont respectivement reliés d'une part au point UP de l'ensemble 2 chacun par l'une des résistances RA, RB,..., RN pour la création de la valeur de pilotage et d'autre part à un point UR commun aux résistances d'aval, chacun par l'une de ces résistances d'aval.

Les "n" écrêteurs sont aussi tous directement reliés au point commun UR.

En l'absence de défaillance dans une voie, la tension obtenue en sortie de chaque adaptateur d'impédance est identique à celle présente à son entrée.

En cas contraire, le voteur limite l'influence de la perturbation en raison de l'action des écrêteurs qui limitent chacun la tension maximale en sortie de l'adaptateur d'impédance leur correspondant, à la valeur moyenne des "n" tensions de sortie simultanément présentes.

Une amplification en courant de cette valeur moyenne est alors réalisée par les adaptateurs d'impédance.

Dans le cas où le nombre "n" est de trois, une limitation à 4% de variation perturbatrice est obtenue en sortie des régulateurs, en cas de défaillance brutale et cette perturbation ne sera que momentanée, si les régulateurs sont du type indiqué plus haut.

Dans l'exemple présenté chaque module de voteur comporte un détecteur d'écart 10A, 10B, ...,10N dont l'accès est constitué par un comparateur relié par ses deux entrées en sortie de l'adaptateur d'impédance du module, de part et d'autre de la résistance d'aval de ce module de voteur.

Chaque détecteur d'écart est relié à l'entrée du correcteur de décalage 5A, 5B,... 5N du module pour la correction des légères dérives et erreurs au niveau des modules régulateurs, ceci permet un fonctionnement identique des modules régulateurs et donc des modules de voteur, sans prééminence d'une voie par rapport aux autres en fonctionnement normal.

Une commande de signalisation de défaut est également fournie par chaque détecteur d'écart, en cas de variation critique au niveau de la voie desservie.

Dans la réalisation envisagée, il est à noter que la défaillance d'un adaptateur d'impédance est susceptible d'entraîner une variation dont l'amplitude serait analogue à celle antérieurement possible.

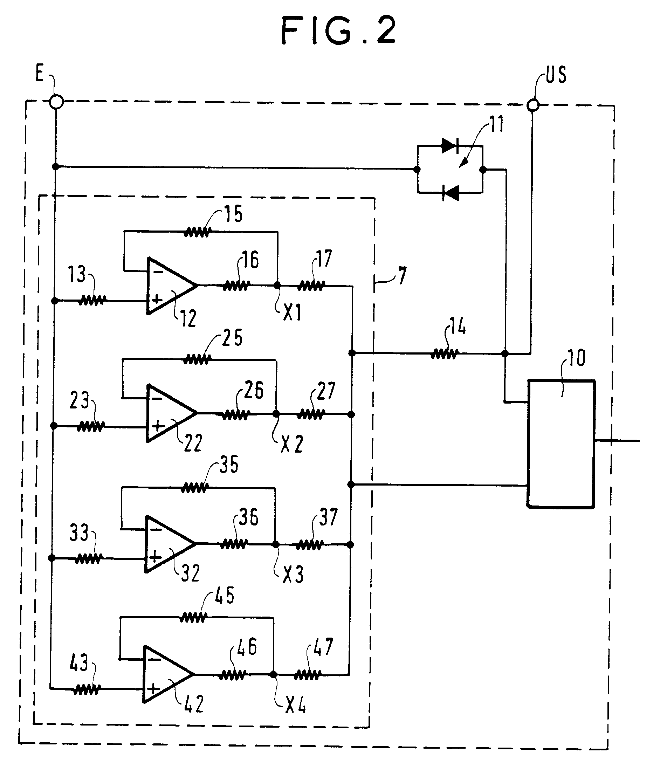

Or cet élément est celui qui est le plus fragile de tous ceux qui constituent un module de voteur, l'écrêteur étant classiquement constitué de deux diodes montées tête-bêche, telles les diodes 11 sur la figure 2, qui ne sont susceptibles d'être parcourues que par de très faibles courants.

Dans sa forme la plus rudimentaire un tel adaptateur d'impédance est susceptible de ne comporter qu'un amplificateur opérationnel 12 recevant, sur son entrée non-inverseuse et par une entrée E de l'adaptateur, le signal de sortie d'un module régulateur, via une impédance d'entrée de grande valeur, ici référencée 13, comme indiqué en relation avec la figure 1; une boucle réactive assure le report de la tension de sortie de l'amplificateur 12 sur son entrée inverseuse.

Dans une forme préférée de réalisation présentée figure 2, un adaptateur d'impédance de module de voteur comporte quatre amplificateurs opérationnels, référencés 12, 22, 32, 42 destinés à se compenser mutuellement en cas de défaillance touchant l'un ou l'autre d'entre eux.

Ces amplificateurs opérationnels sont à cet effet communément reliés par leurs entrées non-inverseuses respectives à l'entrée E de l'adaptateur d'impédance, chacun via une résistance d'entrée, référencée 13 ,23, 33 ou 43, de très grande valeur, comme déjà indiqué.

La sortie de chacun d'entre ces amplificateurs est reliée à celle des autres pour attaquer en commun la résistance d'aval, ici référencée 14, du module de voteur qui les comporte et par conséquent l'écrêteur à diodes 11, la borne de sortie, référencée US, par laquelle ce module se relie à une des résistances RA, RB,.., RN de l'ensemble 2, et en dernier lieu l'une des deux entrées du détecteur d'écart 10 associé.

Des résistances de protection, de faible valeur, sont de plus ajoutées au montage notamment dans chaque boucle de réaction, telles les résistances 15, 25, 35 et 45, entre la sortie de chaque amplificateur opérationnel et le point de connexion X1 à X4, correspondant, de boucle réactive, telles les résistances 16, 26, 36, 46, ainsi qu'entre chaque point de connexion X1 à X4 et la résistance d'aval à laquelle il est relié, de même que les autres points de connexion correspondants de l'adaptateur d'impédance considéré, telles les résistances 17, 27, 37 et 47.

## Revendications

1/ Dispositif limiteur de perturbation pour équipement de régulation d'un actionneur d'une chaîne de commande de processus où ledit actionneur est piloté à partir d'une unité génératrice de consigne (1) et au travers d'une pluralité de modules régulateurs (3A, 3B, ..., 3N), préférablement du type proportionnel et intégral, fournissant chacun une commande de pilotage sous forme de tension et étant reliés à l'actionneur par l'intermédiaire d'un point commun (UP), via une résistance individuelle (RA à RN), de même valeur pour chacun, de manière que la commande de pilotage fournie à l'actionneur soit la valeur moyenne des tensions individuellement fournies par ces modules régulateurs, en fonction de la consigne qui leur est appliquée et d'une mesure traduisant l'effet produit par l'actionneur sur le processus, ledit dispositif étant caractérisé en ce qu'il est constitué par un voteur composé de modules (4A, 4B,..., 4N) qui s'insèrent chacun entre la sortie de l'un des modules régulateurs et la résistance individuelle correspondante liée au point commun au travers duquel l'actionneur est piloté, chaque module de voteur comportant un adaptateur d'impédance (7A, 7B,..., 7N) relié par une entrée haute impédance à la sortie d'un module régulateur et par une sortie à la résistance individuelle correspondante, cette sortie d'adaptateur étant reliée par une résistance, dite d'aval, (9A, 9B, ..., 9N) d'une part en boucle à l'entrée de cet adaptateur par l'intermédiaire d'un écrêteur(8A, 8B, ..., 8N), d'autre part à un point (UR) commun à tous les adaptateurs du voteur.

2/ Dispositif limiteur de perturbation selon la revendication 1, caractérisé en ce que chaque module de voteur comporte un détecteur d'écart (10A, 10B, ..., 10N) dont les entrées sont connectées de part et d'autre de la résistance, dite d'aval, de ce module et dont la sortie est reliée par un correcteur de décalage (5A, 5B,..., 5N) à une entrée de correction du module régulateur auquel ce module voteur est relié.

3/ Dispositif limiteur de perturbation selon la revendication 1, caractérisé en ce que chaque module voteur comporte un adaptateur d'impédance (7A, 7B,..., 7N) composé d'une pluralité d'unités identiques en parallèle, chaque unité étant structurée autour d'un amplificateur opérationnel(12, 22, 32, 42), à entrée haute impédance et à boucle de réaction, dont toutes les liaisons sont dotées de résistances de protection.

# FIG.1

# FIG.2

**Office européen des brevets**

# RAPPORT DE RECHERCHE EUROPEENNE

Numero de la demande

EP    92 40 1725

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|-----------|-------------------------------------------------------------------------------|------------------------|----------------------------------------|
| A | DE-A-2 151 162 (SIEMENS AG)<br>* page 2, ligne 8 - page 5, ligne 7; figure 1 *<br>--- | 1-3 | G05B9/03 |
| A | DE-A-2 502 710 (KRAFTWERK UNION AG)<br>* page 3, ligne 1 - page 4, ligne 21; figure 1 *<br>--- | 1,3 | |
| A | DE-A-3 031 438 (SIEMENS AG)<br>* page 5, ligne 6 - page 6, ligne 31; figures 1,3 *<br>----- | 1 | |

**DOMAINES TECHNIQUES RECHERCHES (Int. Cl.5 )**

G05B
G05D

Le présent rapport a été établi pour toutes les revendications

| Lieu de la recherche | Date d'achèvement de la recherche | Examinateur |
|----------------------|-----------------------------------|-------------|
| LA HAYE | 24 SEPTEMBRE 1992 | GOETZ P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................

& : membre de la même famille, document correspondant

EPO FORM 1503 03.82 (P0402)